# EUROPÄISCHE PATENTSCHRIFT

(11) **EP 1 101 362 B1**
(45) Veröffentlichungstag und Bekanntmachung des Hinweises auf die Patenterteilung: **04.10.2006**
(21) Anmeldenummer: 00943633.8
(22) Anmeldetag: 24.05.2000
(51) Int. Cl.: H04N 13/00, H04N 9/31

(54) **VORRICHTUNG ZUR PROJEKTION EINES FARBBILDS**
DEVICE FOR PROJECTING A COLOUR IMAGE
DISPOSITIF DESTINE A LA PROJECTION D'UNE IMAGE EN COULEUR

(30) Priorität: 26.05.1999 DE 19924167
(43) Veröffentlichungstag der Anmeldung: 23.05.2001
(73) Patentinhaber: DaimlerChrysler AG, 70567 Stuttgart (DE)
(72) Erfinder: JORKE, Helmut, D-89547 Gerstetten (DE)
(86) Internationale Anmeldenummer: PCT/DE2000/001666
(87) Internationale Veröffentlichungsnummer: WO 2000/074392

(56) Entgegenhaltungen:
- DE-A- 19 808 264
- US-A- 4 107 732
- US-A- 5 537 476
- PATENT ABSTRACTS OF JAPAN vol. 013, no. 357 (P-915), 10. August 1989 (1989-08-10) & JP 01 116521 A (FUROTSUGUSU:KK;OTHERS: 01), 9. Mai 1989 (1989-05-09)

## Beschreibung

Die Erfindung betrifft eine Vorrichtung zur Projektion eines Farbbilds auf einen Schirm, umfassend eine Farbbildwiedergabe mit einer gegenüber bestehenden Verfahren gesteigerten Farbwiedergabetreue. In einer abgewandelten Form gestattet die Vorrichtung und das dabei eingesetzte Verfahren eine vollfarbige stereoskopische Bildwiedergabe.

In bestehenden Vorrichtungen und Verfahren zur Bildaufzeichnung in vollfarbiger Form wird die Farbinformation durch eine getrennte Aufnahme jener Spektralbereiche erfaßt, die den Grundfarben Rot, Grün und Blau entsprechen. Bei der nachfolgenden Bildwiedergabe werden die Grundfarben-Teilbilder wieder zu einem Vollfarbenbild zusammengefügt. Eine derartige Vorrichtung ist beispielsweise aus der WO WO98/49837 bekannt.

Das Grundprinzip, visuelle Inhalte in Farbe zu reproduzieren, findet sowohl bei den fotochemischen Verfahren wie auch bei den elektronischen Verfahren mit lichtelektrischen Wandlern Anwendung.

Die Lage und Breite der genannten Spektralbereiche ist weitgehend vorgegeben durch die spektrale Empfindlichkeit der Farbrezeptoren im menschlichen Auge. Typische Werte sowohl seitens der Bildaufzeichnung wie seitens der Bildwiedergabe liegen bei Wellenlängen von

| | |
|---|---|
| Spektralbereich Blau | 430 - 480 nm |
| Spektralbereich Grün | 500 - 550 nm |
| Spektralbereich Rot | 600 - 650 nm |

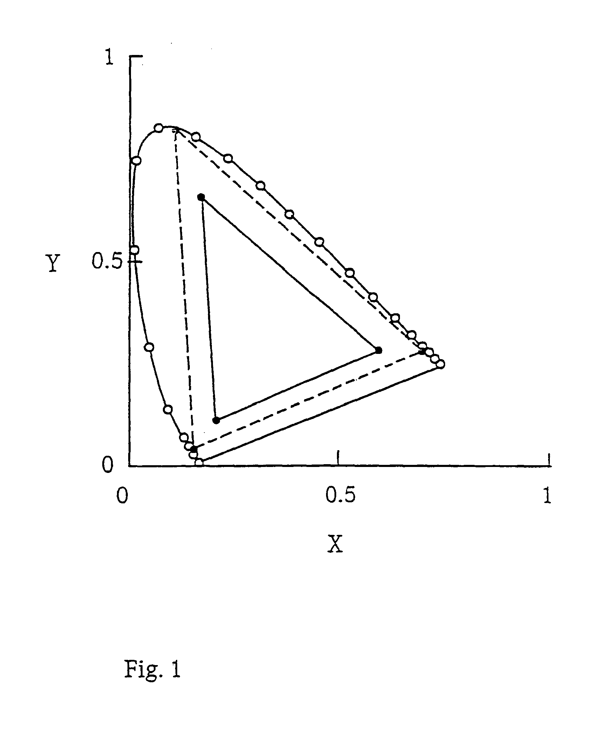

Jedem dieser Spektralbereiche kann über seine Farbkoordinate in der Normfarbtafel nach DIN 6164 (Mütze et al., ABC der Optik, Verlag Dausien, Hanau, 1972) ein Punkt zugeordnet werden. Die Gesamtheit aller der auf diese Weise definierten Grundfarben - die Primärvalenzen - bildet ein Dreieck in der Normfarbtafel, wie in Fig. 1 gezeigt (durchgezogene Linie). Durch eine additive Farbmischung der Grundfarben kann jede Farbe innerhalb dieses Dreiecks dargestellt werden. Farben außerhalb des Dreiecks lassen sich nicht darstellen. Insbesondere sind spektralreine Farben mit ihrer charakteristisch hohen Farbsättigung - sie liegen auf der berandenden Kurve, dem Spektralfarbenzug - nicht darstellbar.

Eine Möglichkeit der Vergrößerung des darstellbaren Farbraums besteht in der Wahl von Primärvalenzen bei der Bildwiedergabe mit engeren Spektralbereichen. Im Extremfall sind die Primärvalenzen schließlich spektralrein und liegen auf dem Spektralfarbenzug, wie in Fig. 1 gezeigt (gestrichelte Linie). Allerdings ist der Preis für die so erzielte Vergrößerung des Farbraums, beispielsweise in Projektionssystemen, die breitbandig emittierende Temperaturstrahler als Projektionslampen verwenden, ein erhebliche Verlust an Bildhelligkeit. Er fällt umso größer aus, je schmalbandiger die Grundfarben sind, weil aus dem gesamten Emissionsspektrum nur entsprechend schmale Emissionsbereiche genutzt werden.

Verwendet man hingegen spektralreine Lichtquellen, wie beispielsweise Laser, so tritt dieser Nachteil nicht auf. Jedoch werden solche Systeme sehr aufwendig. Außerdem führt eine ledigliche Vergrößerung des Farbraums nicht zugleich zu einer gesteigerten Farbwiedergabetreue. Vielmehr muß dem vergrößerten Farbraum wiedergabeseitig auch auf Aufnahmeseite Rechnung getragen werden. Andernfalls kann es zu Farbverfälschungen kommen, die über geeignete Farbtransformationen zu korrigieren sind. Letztere führen aber schließlich wieder zu einer Reduzierung der Größe des Farbraums.

Der Erfindung liegt daher die Aufgabe zugrunde, eine Vorrichtung zur Projektion eines Farbbilds anzugeben, bei dem keine erhebliche Einbuße an Bildhelligkeit stattfindet, bei dem das emittierende Licht der Projektionslampe in effizienter Weise genutzt wird und bei dem schließlich auf aufwendige spektralreine Lichtquellen verzichtet werden kann und kostengünstig realisiert werden kann. Die Aufgabe wird durch eine Vorrichtung zur Projektion eines Farbbilds gemäss Anspruch 1 gelöst.

Es zeigt sich, daß eine Abwandlung der Vorrichtung zur Erzeugung und Wiedergabe dreidimensionaler Bilder genutzt werden kann. Die Vorrichtung bietet dadurch den Vorteil, daß mit wenigen Handgriffen von einem Modus "Bildaufzeichnung und -wiedergabe mit gesteigerter Farbwiedergabetreue" zu einem Modus "Dreidimensionale Bildaufzeichnung und -wiedergabe" und umgekehrt gewechselt werden kann.

Mittels der Vorrichtung wird ein Verfahren zur Wiedergabe von Farbbildern realisiert, wobei bei der Bildwiedergabe ein Projektionsverfahren verwendet wird, welches Licht aus einer einzelnen Projektionslampe über einen ersten dichroitischen Spiegel mit Dreifachbandpaß-Charakteristik in mehrere Teillichtbündel teilt. Die drei Durchlaßbereiche B1, G1, R1 des ersten dichroitischen Spiegels liegen innerhalb der Wellenlängenbereiche für eine dominante Erregung der Blau-, Grün- und Rotrezeptoren im menschlichen Auge. Eines der durchgelassenen Teillichtbündel wird durch einen Farbbildmodulator gelenkt, der die Bildinformation aus dem einen aufgezeichneten Farbbild enthält. Ein weiteres gespiegeltes Teillichtbündel wird durch einen weiteren Farbbildmodulator gelenkt, der die Bildinformation aus dem anderen aufgezeichneten Farbbild enthält. Die beiden Teillichtbündel werden nach ihrer Modulation über einen zweiten dichroitischen Spiegel mit Dreifachbandpaß-Charakteristik wieder zu einem Lichtbündel vereinigt. Der zweite dichroitische Spiegel weist drei Durchlaßbereiche B2, G2, R2 auf, die innerhalb der Wellenlängenbereiche für eine dominante Erregung der Blau-, Grün- und Rotrezeptoren im menschlichen Auge liegen und außerhalb der Durchlaßbereiche B1, G1, R1 des ersten dichroitischen Spiegels liegen. Die Strahlvereinigung erfolgt dabei in der Weise, daß das am ersten dichroitischen Spiegel durchgelassene Teillichtbündel am zweiten dichroitischen Spiegel gespiegelt wird.

Die beiden Farbbilder werden in einer Weise aufgezeichnet, daß Licht vom Aufnahmeobjekt zunächst bevorzugt über einen dichroitischen Spiegel mit drei Durchlaßbereichen B1, G1, R1 geteilt wird. Das durchgelassene Teillichtbündel dient der Aufzeichnung des einen Farbbildes. Das gespiegelte Teillichtbündel dient der Aufzeichnung des anderen Farbbildes. Die beiden Farbbilder werden von einer Stereokamera aufgezeichnet. Der dichroitische Spiegel mit den Durchlaßbereichen B1, G1, R1 ist zweckmäßigerweise in einem Strahlteiler integriert, der als geschlossene Baugruppe den beiden Objektiven der Stereokamera vorgeschaltet wird. Bei der Bildwiedergabe trägt der Betrachter vorzugsweise eine Brille, die vor das eine Auge einen Interferenzfilter mit den Durchlaßbereichen B1, G1, R1 und vor das andere Euge einen Intereferenzfilter mit den Durchlaßbereichen B2, G2, R2 umfaßt. Hierdurch empfängt das linke Auge ausschließlich das mit dem linken Kameraobjektiv aufgezeichnete Farbbild und das rechte Auge ausschließlich das mit dem rechten Kameraobjektiv aufgezeichnete Farbbild, wodurch ein stereoskopisches Sehen mit einer besonders hohen Farbtreue und - sättigung gegeben ist.

Die Erfindung wird im folgenden anhand eines Ausführungsbeispiel beschrieben unter Bezugnahme auf schematische Zeichnungen.

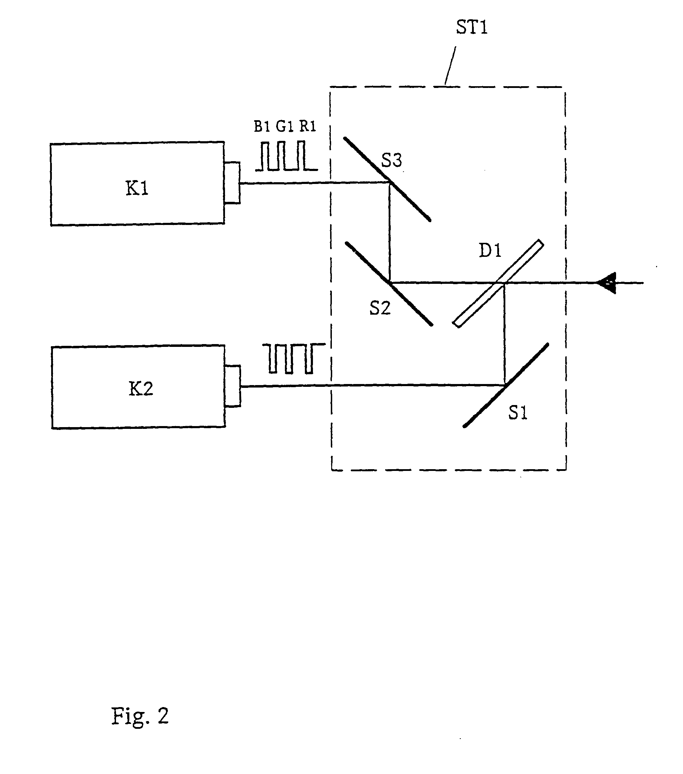

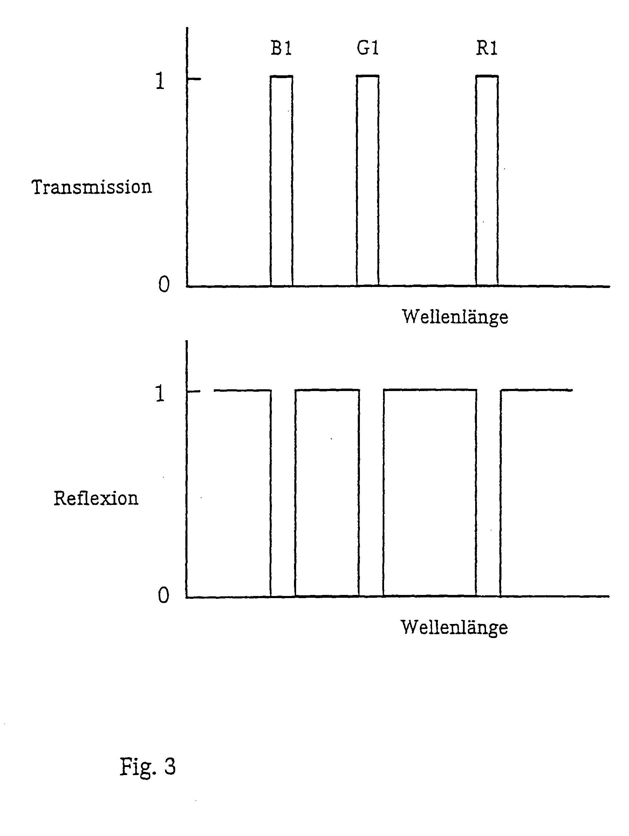

Fig. 2 zeigt ein Bildaufzeichnungssystem, bestehend aus einer Kamera K1 und einer Kamera K2 mit einem vorgesetzten Strahlteiler ST1 der als eine Baugruppe aus den Spiegeln S1, S2, S3 und einem dichroitischen Spiegel D1 mit einem Transmissions- und Reflexionsverhalten, wie Fig. 3 zeigt, besteht. Das von einem Aufnahmeobjekt auf D1 fallende Licht wird spektral zerlegt in zwei Teillichtbündel. Das über die Spiegel S2 und S3 in die Kamera 1 gelangende Teillichtbündel besteht spektral aus drei Anteilen B1, G1, R1, die beispielsweise die Wellenlängenbereiche

| | |
|---|---|
| B1 | 435 - 455 nm |
| G1 | 510 - 530 nm |
| R1 | 600 - 620 nm |

abdecken.

Das über den Spiegel S1 in die Kamera 2 gelangende Teillichtbündel setzt sich aus dem zu Lichtbündel 1 komplementären Spektrum zusammen.

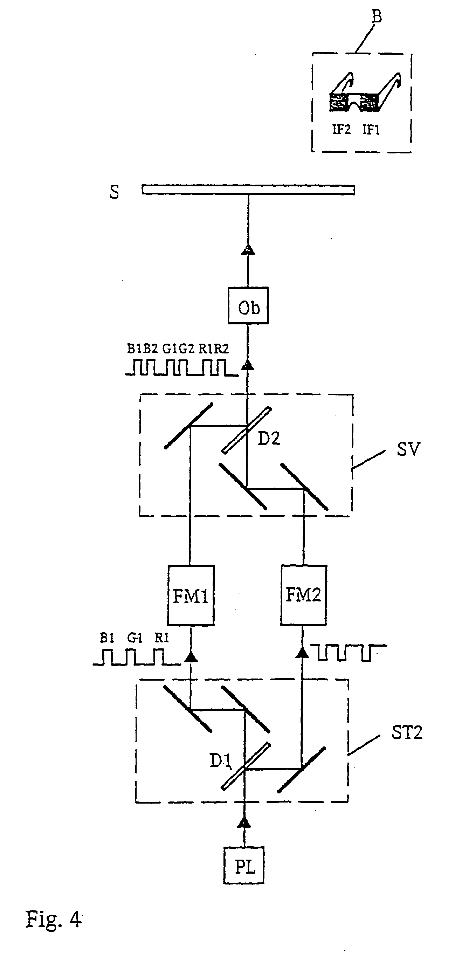

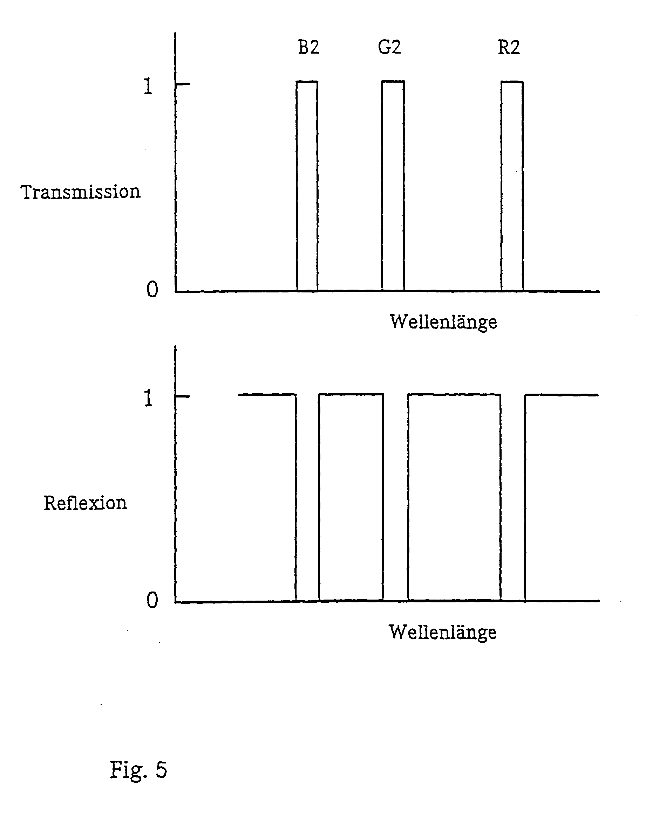

Fig. 4 zeigt als Ausführungsbeispiel der Erfindung eine Vorrichtung zur Projektion eines Farbbildes (auch Bildwiedergabesystem genannt), bestehend aus einer Projektionslampe PL mit einem Temperaturstrahler, der ein breitbandiges Spektrum emittiert, einem Strahlteiler ST2 mit prinzipiell gleichem Aufbau wie der Strahlteiler ST1, zwei Farbbildmodulatoren FM1 und FM2, die beispielsweise auf Basis der Lichtventiltechnik arbeiten, einem Strahlvereiniger SV mit prinzipiell gleichem Aufbau wie ST1, einem Projektionsobjektiv Ob und einem Bildschirm S. Der innere Aufbau von Farbbildmodulatoren ist dem Stand der Technik zu entnehmen (G. Derra et al., "UHP-Lampen: Lichtquellen extrem hoher Leuchtdichte für das Projektionsfernsehen", Phys. Blätter, 54 (1998, Nr. 9). Der Strahlvereiniger SV führt die Teillichtbündel nach ihrer Modulation in den Farbbildmodulatoren FM1 und FM2 wieder zusammen. Dabei enthält der Farbbildmodulator FM1 die Bildinformation aus Kamera 1 und der Farbbildmodulator FM2 die Bildinformation aus Kamera 2. Der im Strahlvereiniger SV enthaltene dichroitische Spiegel D2 weist ein Transmissions- und Reflexionsverhalten, wie in Fig. 5 gezeigt, auf. Durch dieses Transmissions- und Reflexionsverhalten wird erreicht, daß das aus dem Strahlvereiniger SV austretende Lichtbündel spektral aus sechs Bereichen besteht. Neben den Spektralbereichen B1, G1, R1 finden sich in seinem Spektrum die Anteile B2, G2, R2, die beispielsweise die Wellenlängenbereiche

| | |
|---|---|
| B2 | 460 - 480 nm |
| G2 | 535 - 555 nm |
| R2 | 625 - 645 nm |

abdecken.

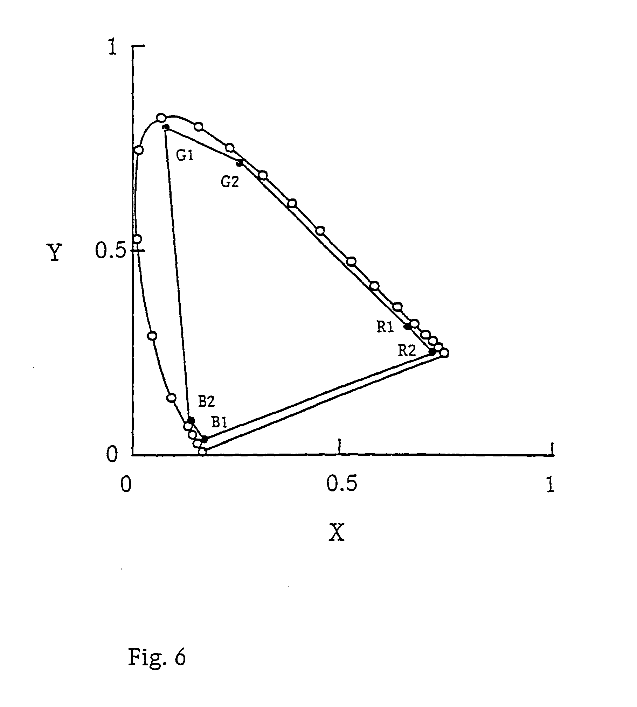

Das mittels der Vorrichtung ausführbare Bildaufzeichnungs- und Bildwiedergabevefahren benutzt statt drei - wie in bestehenden Verfahren üblich - sechs Primärvalenzen, die den Spektralbereichen B1, B2, G1, G2, R1, R2 entsprechen. Dadurch ist ein vergrößerter Farbraum darstellbar, wie in Fig. 6 gezeigt. Durch eine spektrale Aufteilung bereits bei der Bildaufzeichnung mittels des Strahlteilers ST2 wird erreicht, daß ein vergrößerter Farbraum mit dem beschriebenen Verfahren nicht nur darstellbar, sondern auch weitgehend reproduzierbar ist. Zur Verdeutlichung dieses Sachverhalts sei angenommen, es falle spektralreines Licht mit λ = 450 nm in das Bildaufzeichnungssystem (= Farbmodulatoren FM1, FM2), wie in Fig. 2 gezeigt. Aufgrund der Strahlteilung in ST1 wird nur der blaue Spektralbereich der Kamera 1 angesprochen. Entsprechend öffnet nur das Lichtventil für den Spektralbereich Blau im Farbmodulator FM1 des Bildwiedergebesystems gemäß Fig. 4. Nach der Strahlvereinigung im Strahlvereiniger SV findet sich im Spektrum nur die Primärvalenz B1 und erzeugt auf dem Bildschirm S einen nahezu gesättigten Farbeindruck der Farbe Blau. Bei den bestehenden Verfahren mit einer Primärvalenz Blau im Wellenlängenbereich
430 - 480 nm
wäre die reproduzierte Farbsättigung und damit die Farbwiedergabestreue deutlich geringer.

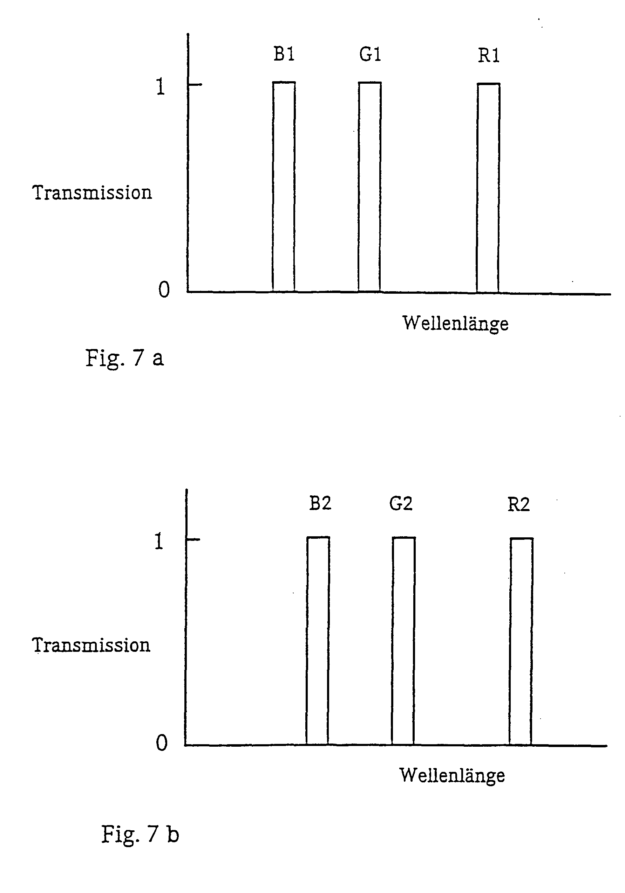

In einer abgewandelten Form wird auf den Strahlteilervorsatz ST1 als Baugruppe verzichtet. Kamera 1 und Kamera 2 zeichnen dann ein stereoskopisches Bildpaar auf. Bei der Bildwiedergabe nach Fig. 4 ist die Bildinformation des von Kamera 1 aufgenommenen linken Halbbildes in den Primärvalenzen B1, G1, R1 enthalten. Die Bildinformation des rechten Halbbildes ist in den Primärvalenzen B2, G2, R2 enthalten. Mit Hilfe einer zusätzlichen Brille B auf Betrachterseite, die Interferenzfilter IF1 und IF2 mit einem Transmissionsverhalten, wie in den Fig. 7a (IF1) und Fig. 7b (IF2) gezeigt, enthält, wird erreicht, daß das linke Auge des Betrachters nur das linke Halbbild und das rechte Auge nur das rechte Halbbild empfängt. Dadurch entsteht beim Betrachter der Eindruck eines Raumbildes.

Zwischen der Betriebsart der Bildaufzeichnung mit gesteigerter Farbwiedergabetreue - wie im Ausführungsbeispiel 1 beschrieben - und der Betriebsart der Raumbildaufzeichnung - wie im Ausführungsbeispiel 2 beschrieben - kann in einfacher Weise durch Abnehmen oder Anbringen des Strahlteilers ST1, ST2 als einer geschlossenen Baugruppe hin- und hergewechselt werden. Eine weitere Möglichkeit besteht im Herauskippen der Spiegel S1 und S3 aus dem Strahlengang.

## Patentansprüche

1. Vorrichtung zur Projektion eines Farbbilds auf einen Schirm (S) umfassend eine einzige Projektionslampe (PL) zur Emission eines Strahlenspektrums und einen Strahlteiler (ST2) zur Aufteilung des Strahlenspektrums in ein erstes Teillichtbündel (B1,G1,R1) und in ein zweites zum ersten Teillichtbündel (B1,G1,R1) komplementären Teillichtbündel (B2,G2,R2) und zwei Farbbildmodulatoren (FM1, FM2) zur Wiedergabe von Bildern im jeweiligen Teillichtbündel (B1, G1, R1, B2, G2, R2), wobei nach den Farbbildmodulatoren (FM1, FM2) ein Strahlvereiniger (SV) zur Vereinigung des ersten Teillichtbündels (B1,G1,R1) mit dem zweiten Teillichtbündel (B2, G2, R2) sowie ein Objektiv (Ob) zur Ausgabe des daraus resultierenden Farbbilds vorgesehen sind.

2. Vorrichtung nach Anspruch 1, bei der der Strahlteiler (ST2) einen ersten dichroitischen Spiegel (D1) mit Dreifachbandpaß-Charakteristik (B1,G1,R1) umfaßt.

3. Vorrichtung nach Anspruch 2, bei der der Strahlvereiniger (SV) einen zweiten dichroitischen Spiegel (D2) mit anderer Dreifachband-Charakteristik (B2, G2, R2) umfaßt.

4. Vorrichtung nach einem der Ansprüche 1 bis 3, bei der das das erste Teillichtbündel drei erste schmale Durchlaßbereiche (B1, G1, R1) und das zweite Teillichtbündel drei zweite schmale zu den ersten Durchlaßbereichen komplementäre Durchlaßbereiche (B2, G2, R2) umfassen, wobei die Durchlaßbereiche (B1, G1, R1, B2, G2, R2) innerhalb der Wellenlängenbereiche der Blau-, Grün- und Rotrezeptoren liegen.

5. Vorrichtung nach einem der Ansprüche 1 bis 4, bei der der Strahlteiler (ST2) mindestens einen Spiegel umfaßt.

6. Vorrichtung nach Anspruch 1, bei der der Strahlvereiniger (SV) mindestens einen weiteren Spiegel umfaßt.

7. Vorrichtung nach Anspruch 1, bei der eine Brille (B) mit für das linke Auge und das rechte Auge unterschiedlichem Transmissionsverhalten aufweisenden Interferenzfiltern (IF1, IF2) vorgesehen ist, die für das linke Auge ein Halbbild mit dem ersten Durchlaßbereich (B1, G1, R1) und für das rechte Auge ein weiteres Halbbild mit dem zweiten Durchlaßbereich (B2, G2, R2) zum stereoskopischen Sehen erzeugt.

## Claims

1. Device for projecting a colour image onto a screen (S), comprising a single projection lamp (PL) for emitting a beam spectrum and a beam splitter (ST2) for splitting the beam spectrum into a first sub-lightbeam (B1, G1, R1) and into a second sub-lightbeam (B2, G2, R2) complementary to the first sub-lightbeam (B1, G1, R1), and two colour image modulators (FM1, FM2) for reproducing images in the respective sub-lightbeams (B1, G1, R1, B2, G2, R2), a beam combiner (SV) for combining the first sub-lightbeam (B1, G1, R1) with the second sub-lightbeam (B2, G2, R2) as well as an objective (Ob) for outputting the resulting colour image being provided after the colour image modulators (FM1, FM2).

2. Device according to Claim 1, in which the beam splitter (ST2) comprises a first dichroic mirror (D1) with a triple bandpass characteristic (B1, G1, R1).

3. Device according to Claim 2, in which the beam combiner (SV) comprises a second dichroic mirror (D2) with another triple band characteristic (B2, G2, R2).

4. Device according to one of Claims 1 to 3, in which the first sub-lightbeam comprises three first narrow transmission ranges (B1, G1, R1) and the second sub-lightbeam comprises three second narrow transmission ranges (B2, G2, R2) complementary to the first transmission ranges (B1, G1, R1), the transmission ranges (B1, G1, R1, B2, G2, R2) lying inside the wavelength ranges of the blue, green and red receptors.

5. Device according to one of Claims 1 to 4, in which the beam splitter (ST2) comprises at least one mirror.

6. Device according to Claim 1, in which the beam combiner (SV) comprises at least one further mirror.

7. Device according to Claim 1, in which spectacles (B) are provided with interference filters (IF1, IF2) having different transmissivities for the left eye and the right eye which, for stereoscopic viewing, produce one half-image with the first transmission range (B1, G1, R1) for the left eye and another half-image with the second transmission range (B2, G2, R2) for the right eye.

## Revendications

1. Dispositif de projection d'une image en couleur sur un écran (S) comprenant une unique lampe de projection (PL) destinée à émettre un spectre de rayonnement et un séparateur de rayons (ST2) destiné à séparer le spectre de rayonnement en un premier faisceau lumineux partiel (B1, G1, R1) et en un deuxième faisceau lumineux partiel (B2, G2, R2) complémentaire du premier faisceau lumineux partiel (B1, G1, R1) et deux modulateurs d'image en couleur (FM1, FM2) pour restituer des images dans les faisceaux lumineux partiels respectifs (B1, G1, R1, B2, G2, R2), un combinateur de rayons (SV) destiné à combiner le premier faisceau lumineux partiel (B1, G1, R1) avec le deuxième faisceau lumineux partiel (B2, G2, R2) ainsi qu'une objectif (Ob) destiné à délivrer l'image en couleur qui en résulte étant prévus après les modulateurs d'image en couleur (FM1, FM2).

2. Dispositif selon la revendication 1, avec lequel le séparateur de rayons (ST2) comprend un premier miroir dichroïque (D1) ayant une caractéristique triple passe-bande (B1, G1, R1).

3. Dispositif selon la revendication 2, avec lequel le combinateur de rayons (SV) comprend un deuxième miroir dichroïque (D2) ayant une autre caractéristique triple passe-bande (B2, G2, R2).

4. Dispositif selon l'une des revendications 1 à 3, avec lequel le premier faisceau lumineux partiel comprend trois premières bandes de transmission étroites (B1, G1, R1) et le deuxième faisceau lumineux partiel comprend trois deuxièmes bandes de transmission étroites (B2, G2, R2) complémentaires des premières bandes de transmission, les bandes de transmission (B1, G1, R1, B2, G2, R2) se trouvant à l'intérieur des plages de longueurs d'onde des récepteurs bleu, vert et rouge.

5. Dispositif selon l'une des revendications 1 à 4, avec lequel le séparateur de rayons (ST2) comprend au moins un miroir.

6. Dispositif selon la revendication 1, avec lequel le combinateur de rayons (SV) comprend au moins un miroir supplémentaire.

7. Dispositif selon la revendication 1, avec lequel il est prévu une paire de lunettes (B) munie de filtres à interférences (IF1, IF2) ayant des propriétés de transmission différentes pour l'oeil gauche et pour l'oeil droit, laquelle génère pour l'oeil gauche une demi-image avec la première bande de transmission (B1, G1, R1) et pour l'oeil droit une autre demi-image avec la deuxième bande de transmission (B2, G2, R2) en vue d'une vision stéréoscopique.
